# EUROPEAN PATENT SPECIFICATION

(11) **EP 1 539 537 B1**
(45) Date of publication and mention of the grant of the patent: **22.11.2006**
(21) Application number: 03733816.7
(22) Date of filing: 02.07.2003
(51) Int. Cl.: B60R 9/06, B60R 9/10

(54) **LOAD CARRIER**
LASTTRÄGER
PORTE-CHARGE

(30) Priority: 08.07.2002 SE 0202121
(43) Date of publication of application: 15.06.2005
(73) Proprietor: Thule Sweden AB, 330 33 Hillerstorp (SE)
(72) Inventor: FERMAN, Magnus, S-331 54 Värnamo (SE); RAGNARSSON, Magnus, S-331 41 Värnamo (SE)
(86) International application number: PCT/SE2003/001151
(87) International publication number: WO 2004/005075

(56) References cited:
- EP-A2- 1 008 491
- DE-A1- 10 144 550
- SE-C- 138 042
- US-A- 4 875 608

## Description

### Technical field

The present invention relates to a load carrier mounted on a vehicle, by means of a coupling device, for transporting bicycles on a loading surface, said load carrier having a carrier frame on which the front and rear wheels respectively of a bicycle are placed when loaded, said carrier frame comprising a carrier body and a first and a second side frame which are attached to the carrier body in a foldable manner by folding devices, said side frames being able to be folded inward from a respective extended position, in which they form said loading surface, to a folded position, in which they are locate essentially over and on the carrier body, wherein the folding device for each of the side frames, includes a hinge pin attached to the carrier body and a hinge plate attached to the side frame.

### State of the art

Load carriers of the type described above are already known. However, the disadvantage of these known load carriers is that the width of the side frames relative to the carrier body is such that the side frames overlap each other when folded inward and cannot be folded compactly, with the result that the load carrier is bulky for storage purposes when not in use. To overcome this problem, it has been proposed that the width of the side frames should be reduced so that they do not overlap each other when folded inward. In certain cases, however, the result has been that the space available on the side frames for the wheels of the loaded bicycle is insufficient. It has also been proposed that the carrier body should be made wider relative to the side frames; however, this, on the other hand, has prevented certain bicycles from being loaded due to the resultant increased distance between the side frames.

In US 4875608 the problem has been solved by making the depth of the side frames less than that of the carrier body, which permits at least one of the side frames, when folded inward, to be folded into the carrier body, affording a relatively compact folding arrangement. The disadvantage of this design, however, is that the carrier body must, in terms of depth, be oversized relative to that required to transport a given number of bicycles, resulting in unnecessary material usage and making the carrier body unstable.

In SE 138 042 a load carrier for transporting bicycles according to the preamble of claim 1 is shown, having hinged side frames, which are foldable against each other. The side frames are located within an outer frame and being clamped by the frame in its folded position.

### Problems

There exists a need for a foldable bicycle carrier, in which the side frames are of such width relative to the carrier body, that the wheels of a bicycle loaded on the carrier are afforded sufficient room on the side frames, and in which the width of the carrier body is such that the distance between the side frames is not excessive, and in which the side frames can be folded inward without overlapping each other and that the carrier body does not require to be oversized.

### Solution

The present invention affords a solution to the above problems in the form of a load carrier of the type described in the introduction, which is characterised in that the hinge plate is provided with an elongated hole arranged perpendicular to said hinge pin and enclosing said hinge pin, said elongated hole permitting the side frame to be moved sideways in a direction (V) with respect to the carrier body to a position in which it is located over the carrier body.

### Brief description of figures

The invention will hereinafter be described with reference to the appended figures, in which:
figure 1 is a general view of a load carrier in accordance with the present invention,
figure 2 is a general view, in which one of the side frames is folded inward,
figure 3 is a general view, in which both of the side frames are folded inward,
figure 4 is a detail view of a folding device in a position, in which the side frame is extended,
figure 5 is a view corresponding to that shown in figure 4, in which the side frame being folded inward,
figure 6 is a view in which the side frame has been folded further inward compared with figure 5, and
figure 7 is a view in which the side frame has been folded fully inward and moved sideways on the support frame.

### Preferred embodiment

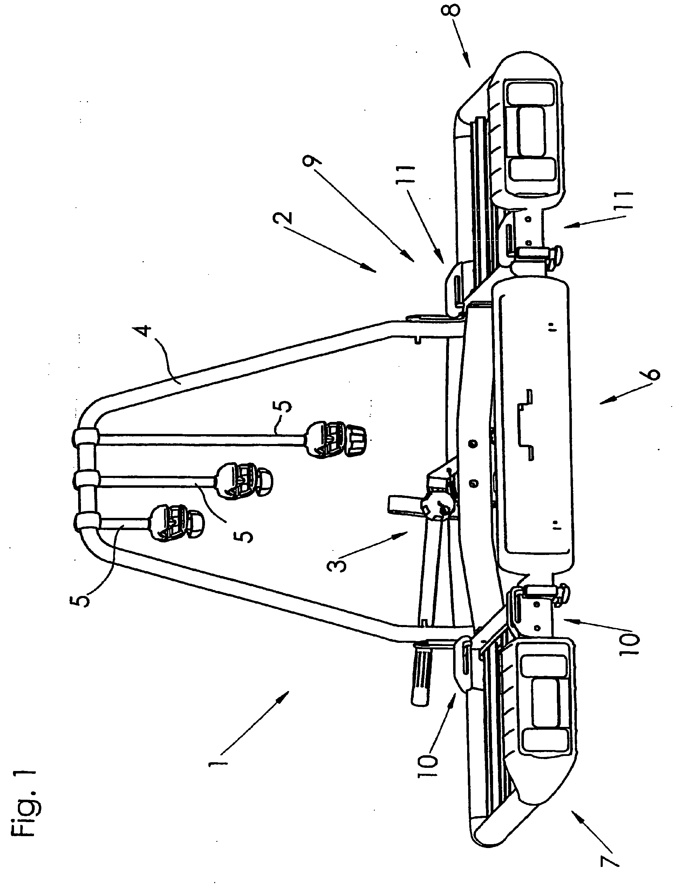

Figure 1 shows a load carrier 1 comprising a carrier frame 2, a coupling device 3, for mounting the load carrier on a vehicle (not shown in the figure), and a support arch 4. The support arch 4 is provided with retaining arms 5 designed for attachment to parts of the frames of the bicycles (not shown) loaded on the carrier to secure them in the loaded position. The carrier frame 2 comprises a carrier body 6, a first side frame 7 and a second side frame 8. In figure 1, the side frames are shown in the extended position, forming a loading surface 9 together with the carrier body. The side frames 7 and 8, respectively, are connected to the carrier body 6 by folding devices 10 and 11, respectively. Although the figures show two folding devices 10 and two folding devices 11, it will be clear to the man skilled in the art that there may be one or several of the folding devices, depending on how they are positioned on the carrier frame parts.

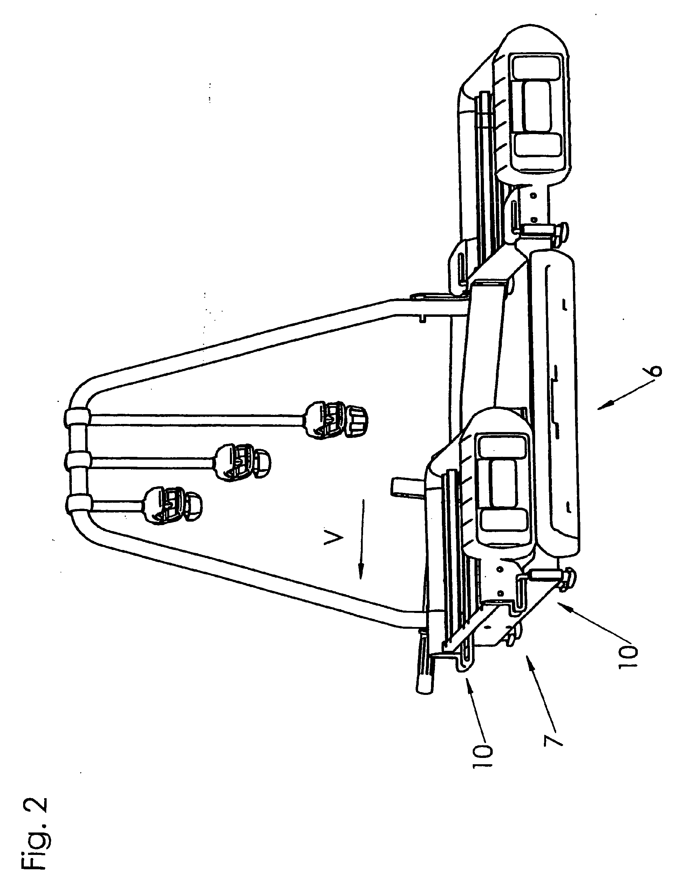

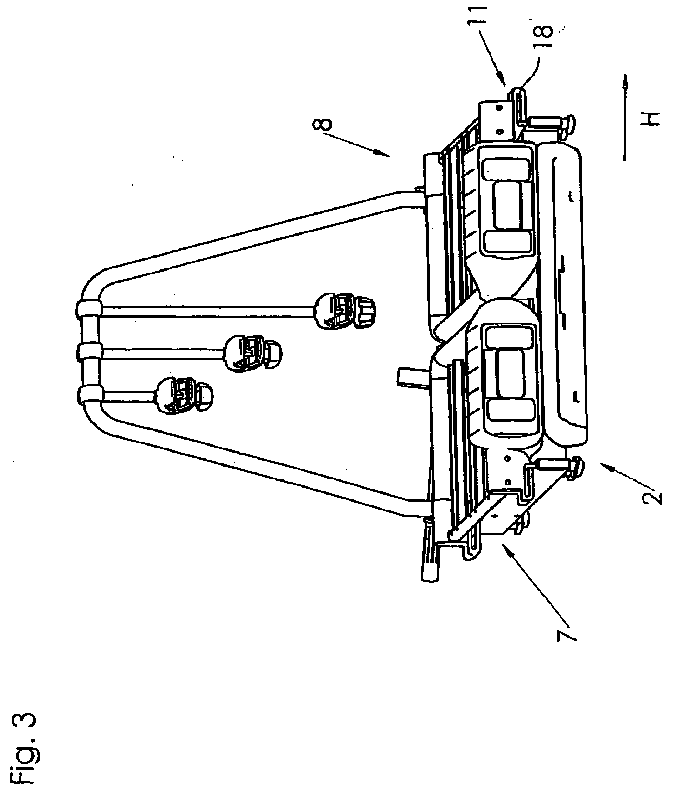

As appears in figure 2, the first side frame 7 is folded inward about the folding device 10, and as can be seen in figure 3, the second side frame 8 is also folded inward about the folding device 11, and as shown the side frames 7 and 8 do not overlap each other, resulting in a compactly folded load carrier 2.

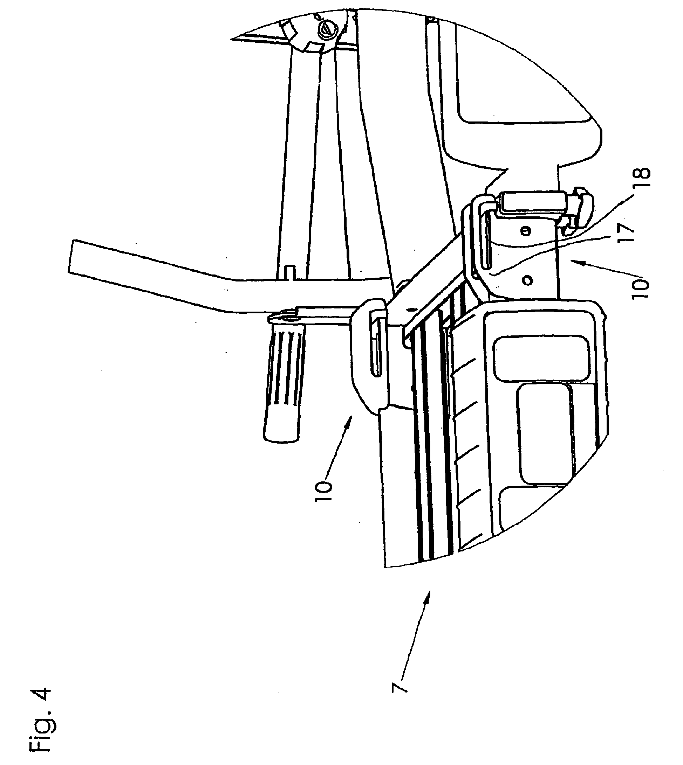

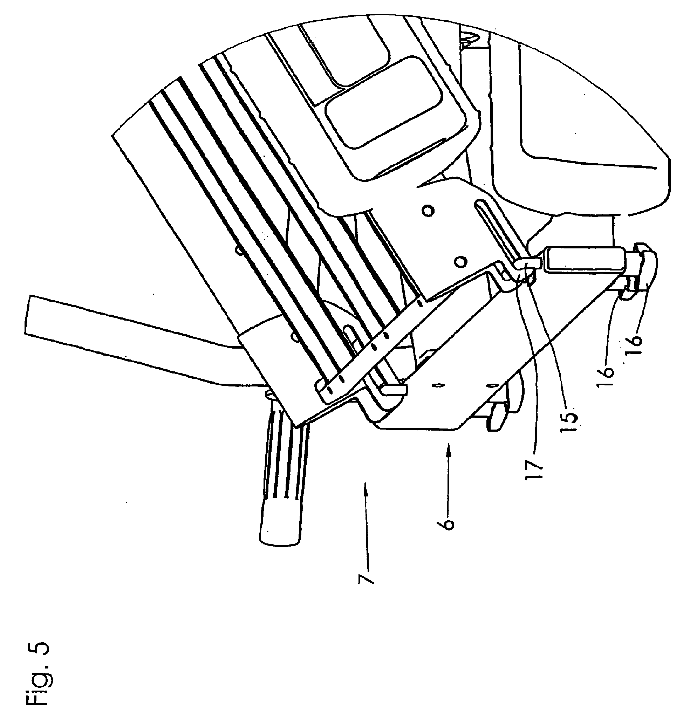

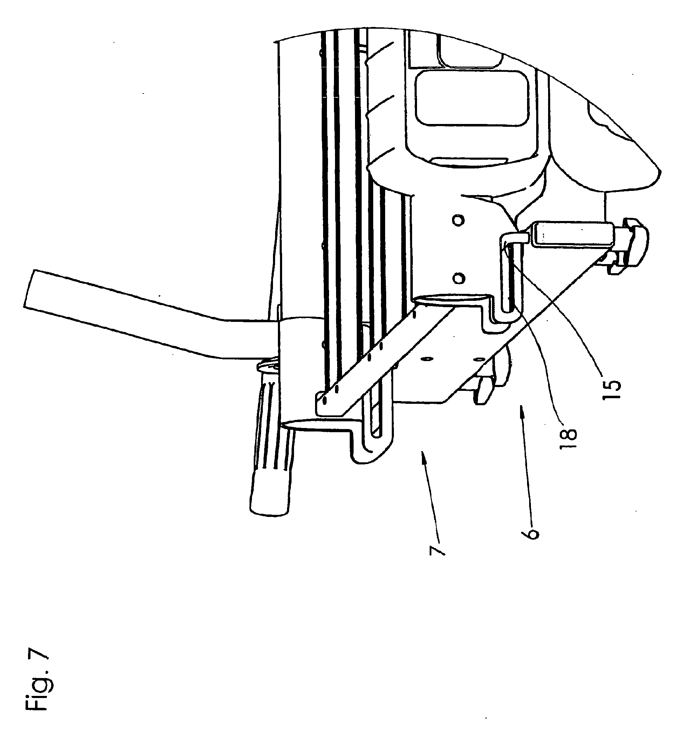

The folding devices of the present invention will hereinafter be described in greater detail with reference to figures 4-7.

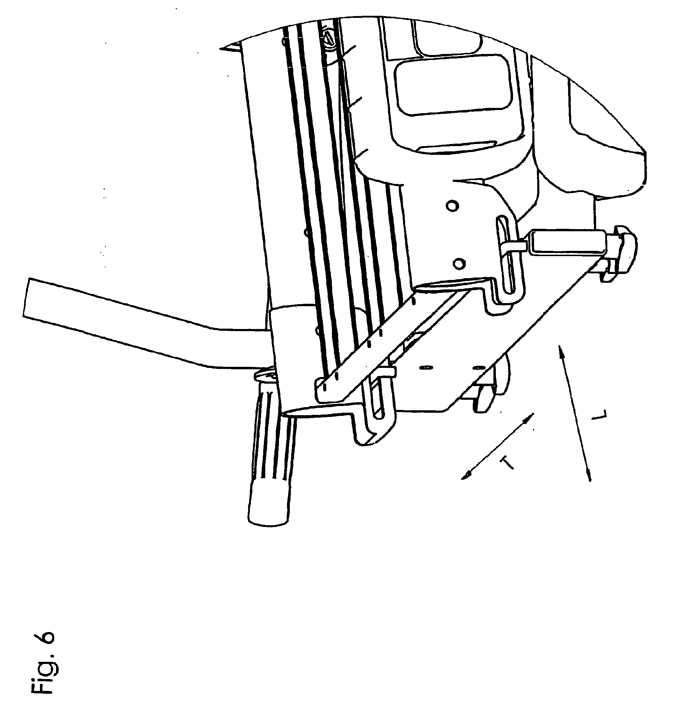

The folding device disclosed in figures 4-7 refers to the folding device 10, but it will be clear to the man skilled in the art that the description is equally applicable to the folding device 11, which is a mirror image of the folding device 10. The folding device 10 comprises a hinge pin 15 attached to the carrier body 6. The hinge pin consists of a U-shaped pin attached to the carrier body 6 in known manner by means of fasteners 16. The side frame 7 is provided with a hinge plate 17, which in the embodiment shown, consists of a U-shaped metal plate attached to the side frame 7 in known manner. The hinge plate is provided with an elongated hole 18 enclosing the hinge pin 15. The longitudinal direction of the elongated hole is indicated by the double arrow L and the longitudinal direction of the hinge pin by the double arrow T (see figure 6). The longitudinal part of the hinge pin is shown placed over the carrier body 6, but it is clear to the man skilled in the art that the said part may be placed offset to the carrier body.

The function of the folding devices will be described below in greater detail with reference to figures 1-7. In the extended position, the carrier body 6 and side frames 7 and 8 comprise a carrier frame 2 (figure 1). When the side frame 7 is folded inward, the frame is turned clockwise and the hinge plate 17 is pivoted about the hinge pin 15 in the manner illustrated in figures 4-7. In the position in which the side frame is located at the end of the folding phase, the side frame can be moved sideways on the carrier body in the direction indicated by the arrow V in figure 2, as the elongated hole 18 permitting the hinge plate 17 to move relative to the hinge pin 15. The side frame 8 is then folded in corresponding manner in the counter clockwise direction into the position shown in figure 3, and the side frame 8 is moved in the direction indicated by the arrow H in figure 3. The sideways movement of the side frames creates sufficient space on the carrier body 6 to permit the side frames to be folded without overlapping each other. Although both of the folding devices 10 and 11 are shown in the figures with elongated holes, it will be clear to the man skilled in the art that only one of the folding devices 10 or 11 need to be provided with an elongated hole. In such case, however, the elongated hole must be made longer and tests have shown that the invention works best if each of the respective elongated holes is between 1 and 10 centimetres in length.

## Claims

1. Load carrier (1) mounted on a vehicle, by means of a coupling device (3), for transporting bicycles on a loading surface (9), said load carrier (1) having a carrier frame (2) on which the front and rear wheels respectively of a bicycle are placed when loaded, said carrier frame (2) comprising a carrier body (6) and a first and a second side frame (7,8) which are attached to the carrier body (6) in a foldable manner by folding devices (10,11), said side frames (7,8) being able to be folded inward from a respective extended position, in which they form said loading surface, to a folded position, in which they are located essentially over and on the carrier body (6), wherein the folding device (10,11) for each of the side frames (7,8), includes a hinge pin (15) attached to the carrier body (6) and a hinge plate (17) attached to the side frame (7,8), **CHARACTERISED in that** the hinge plate (17) is provided with an elongated hole (18) arranged perpendicular to said hinge pin (15) and enclosing said hinge pin (15), said elongated hole (18) permitting the side frame (7,8) to be moved sideways in a direction (V) with respect to the carrier body (6) to a position in which it is located over the carrier body (6).

2. Load carrier in accordance with claim 1, **CHARACTERISED in that** the elongated hole (18) is between 1-10 centimetres in length

## Patentansprüche

1. An einem Kraftfahrzeug mittels einer Kopplungsvorrichtung (3) angebrachter Lastträger (1) zum Transportieren von Fahrrädern auf einer Ladefläche (9), wobei der Lastträger (1) einen Trägerrahmen (2) aufweist, auf dem die Vorder- bzw. Hinterräder eines verladenen Fahrrads platziert sind, wobei der Trägerrahmen (2) einen Trägerkörper (6) und einen ersten und einen zweiten Seitenrahmen (7, 8), die an dem Trägerkörper (6) durch Klappvorrichtungen (10, 11) in klappbarer Weise befestigt sind, umfasst, wobei die Seitenrahmen (7, 8) von einer jeweils ausgeklappten Stellung, in der sie die Ladefläche bilden, nach innen hin zu einer eingeklappten Stellung eingeklappt werden können, in der sie im Wesentlichen über und auf dem Trägerkörper (6) liegen, indem die Klappvorrichtung (10, 11) für jeden der Seitenrahmen (7, 8) einen Scharnierbolzen (15), der an dem Trägerkörper (6) befestigt ist, und eine an dem Seitenrahmen (7, 8) befestigte Scharnierplatte (17) einschließt,
**dadurch gekennzeichnet, dass** die Scharnierplatte (17) mit einem Langloch (18) versehen ist, das senkrecht zu dem Scharnierbolzen (15) angeordnet ist und den Scharnierbolzen (15) umgibt, wobei das Langloch (18) den Seitenrahmen (7, 8) in die Lage versetzt, seitlich in eine Richtung (V) bezüglich des Trägerkörpers (6) in eine Stellung bewegt zu werden, in der er über dem Trägerkörper (6) liegt.

2. Lastträger gemäß Anspruch 1, **dadurch gekennzeichnet, dass** das Langloch (18) zwischen 1-10 cm lang ist.

## Revendications

1. Porte-charge (1) monté sur un véhicule, au moyen d'un dispositif de couplage (3), pour transporter des bicyclettes sur une surface de chargement (9), le dit porte-charge (1) ayant un châssis porteur (2) sur lequel les roues avant et arrière respectivement d'une bicyclette sont placées lors du chargement, le dit châssis porteur (2) comprenant un corps de support (6) et un premier et un deuxième cadres latéraux (7, 8) qui sont attachés au corps de support (6) d'une manière, rabattable par des dispositifs de pliage (10, 11), les dits cadres latéraux (7, 8) pouvant être rabattus vers l'intérieur à partir d'une position d'extension respective, dans laquelle ils forment la dite surface de chargement, à une position rabattue dans laquelle ils sont situés essentiellement au-dessus et sur le corps de support (6), dans lequel le dispositif de pliage (10, 11) pour chacun des dits cadres latéraux (7, 8) comprend un axe de charnière (15) attaché au corps de support (6) et une plaque de charnière (17) attachée au cadre latéral (7, 8), **caractérisé en ce que** la plaque de charnière (17) comporte un trou allongé (18) disposé perpendiculairement au dit axe de charnière (15) et entourant le dit axe de charnière (15), le dit trou allongé (18) permettant au cadre latéral (7, 8) de se déplacer latéralement dans une direction (V) par rapport au corps de support (6) jusqu'à une position dans laquelle il est situé au-dessus du corps de support (6).

2. Porte-charge selon la revendication 1, **caractérisé en ce que** le trou allongé (18) a une longueur comprise entre 1 et 10 cm.
